# EUROPEAN PATENT APPLICATION

(11) **EP 1 072 841 A2**
(43) Date of publication of application: **31.01.2001**
(21) Application number: 00306505.9
(22) Date of filing: 31.07.2000
(51) Int. Cl.: F21V 9/00

(54) **Infra red lamp**

(30) Priority: 29.07.1999 GB 9917688
(71) Applicant: OXLEY DEVELOPMENTS CO., LTD., Ulverston Cumbria LA12 9QG (GB)
(72) Inventor: Bushell, Timothy George, Lindal-in-Furness, Cumbria LA12 0LS (GB)
(74) Representative: W.P. Thompson & Co.

(57) **Abstract**

An infra red lamp is disclosed which comprises a powered emitter of visible and infra red radiation, which may take the form of an incandescent bulb (10), and a reflector (12) formed to direct radiation from the emitter along an output path of the lamp. A filter (14) which is preferably formed as a cold mirror is arranged in the output path to filter output radiation and preferentially transmits infra red radiation while preferentially blocking visible radiation. The reflector is such as to preferentially reflect infra red radiation and to preferentially transmit or absorb visible radiation. The combined effect of the filter and reflector is to produce an output which is particularly low in visible radiation and the invention is consequently well suited for use in covert operations where infra red sensitive viewing systems are used.

## Description

The present invention is concerned with infra red lamps, and particularly with such lamps having low levels of visible emission.

A well known type of lamp uses an incandescent bulb provided with a reflector, which is typically concave and arranged to direct output light outwardly through a cover formed as a window or lens. Appropriate shaping of the reflector, positioning of the bulb and formation of the cover can produce a carefully tailored output beam pattern. Moulded glass or plastics is typically used for the cover. The reflector may be formed of material such as polished aluminium, or may for example be of glass with a reflective coating.

In lamps for providing visible illumination it is known to form the reflective coating such that it reflects the visible component of the bulb's emission while transmitting radiation in the infra red region of the spectrum. A reflector which functions in this manner is referred to as a cold mirror. It has the advantage of allowing infra red radiation to escape through the reflector, so reducing the operating temperature of the lamp and prolonging the working life of the bulb.

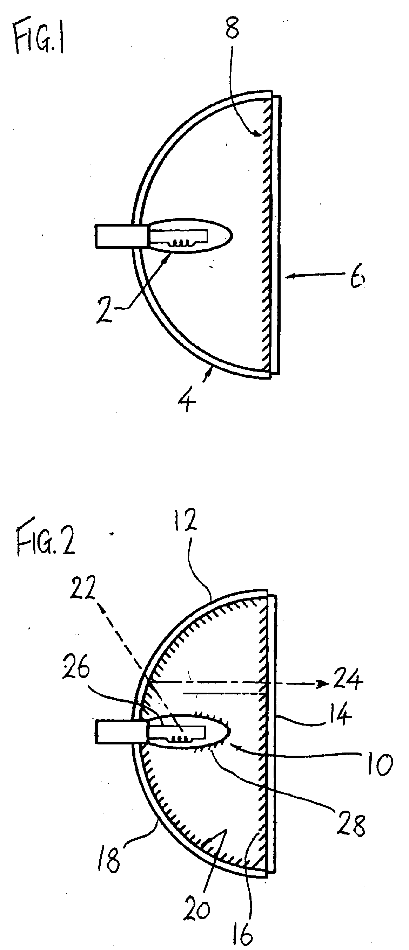

Incandescent bulbs emit across a range of electromagnetic frequencies and so can be used not only in lamps for visible illumination but also in dedicated infra red lamps. They have the advantages over certain other IR sources of high power and low cost. A suitable arrangement is illustrated in Fig. 1, wherein the bulb is labelled 2 and the reflector - which is parabolic - is seen at 4 and is arranged to reflect electromagnetic radiation out through a cover 6. Emission of visible radiation from the lamp is greatly reduced by provision of a cold mirror coating 8 on the cover 6, so that the cover transmits at least the near infra red components of the radiation from the bulb but reflects a large part of the visible component.

In this way, a lamp can be constructed which provides illumination, particularly in the near IR frequency range, for sensitive night viewing devices, eg. CCD (charge coupled device) cameras and image intensifying night vision goggles.

However, known cold mirror covers do not prevent emission of all visible radiation. The cover transmits a small amount of visible radiation in the red region of the spectrum, which can be seen by the human eye and renders the source non-covert. The amount of red light emitted can be reduced using the known arrangement, but only at the expense of blocking more near infra red (NIR) radiation and so reducing the effectiveness of the lamp as a non-visible illuminator.

There are various situations in which it is important to provide illumination in the infra red frequency range without emission of visible frequencies. For example in military contexts it is desirable to provide illumination for night vision systems without emission of visible radiation observable by enemy personnel using the naked eye.

An object of the present invention is to provide an infra red lamp utilising an emitter which emits both infra red and visible radiation but whose output of visible radiation is reduced.

In accordance with the present invention, there is an infra red lamp comprising a powered emitter of visible and infra red radiation, a reflector formed and arranged to direct radiation from the emitter along an output path of the lamp and a filter arranged in the output path to filter radiation output from the lamp, the filter being such as to preferentially transmit infra red radiation and to preferentially block visible radiation to thereby reduce the visible component of the radiation output from the lamp, and the reflector being such as to preferentially reflect infra red radiation and to preferentially transmit or absorb visible radiation to thereby reduce the visible component of the radiation incident on the filter and so further reduce the visible component of the radiation output from the lamp.

In this way an infra red lamp is constructed which has reduced emission in the visible frequencies but whose infra red emission need not be impaired. Lamps according to the present invention can consequently be covert and suitable eg. for use in military contexts.
While known filters of suitable type do not block all of the visible radiation from the emitter, and known reflectors of suitable type may reflect a small proportion of the visible light incident thereon, the ratio of visible emitted light to emitted radiation in the relevant portion of the infra red frequency range in the lamp's output can be greatly improved by means of the present invention.

The infra red frequencies concerned are preferably in the near infra red region. These are typically the frequencies used by night vision systems. It is particularly preferred that the lamp's output is in the wavelength range 850 - 950nm. Preferably the output is substantially confined to this range.

Preferably the reflector is formed as a hot mirror. The function of a hot mirror is to reflect infra red radiation and to preferentially transmit visible radiation. Such mirrors are currently known for use in beam splitters. A reflector formed as a hot mirror can allow visible light from the emitter to escape through itself, thus preventing it from forming part of the lamp's output.

Preferably the filter is formed as a cold mirror. Such a mirror can block visible light by reflecting it back toward the reflector, through which the light can escape without forming part of the lamp's output.

It is particularly preferred that the filter forms a cover for the lamp. The filter may, additionally or alternatively, be formed as a lens for focussing the output radiation.

The emitter itself is preferably electrically powered. An incandescent bulb, and in particular a filament bulb, is preferred.

It is particularly preferred that the lamp further comprises a partition disposed to at least substantially block at least visible radiation from taking a direct path from the emitter to the filter. In this way the proportion of visible light in the radiation incident on the filter can be still further reduced.

The partition may take the form of a mirror interposed between the emitter and the filter. The mirror is preferably arranged to reflect radiation from the emitter toward the reflector.

While the mirror may be such as to reflect both infra red and visible radiation, it is particularly preferred that the mirror is formed as a cold mirror, thereby yet further reducing the proportion of visible light in the radiation incident on the filter.

The partition is formed, in the currently preferred embodiment of the present invention, by a layer formed on the casing of the bulb.

A specific embodiment of the present invention will now be described, by way of example only, with reference to the accompanying drawings in which:-
Fig.1 illustrates in simplified cross section a known near infra red lamp; and
Fig. 2 illustrates in simplified cross section a near infra red lamp embodying the present invention.

The near infra red lamp illustrated in Fig. 2 comprises an incandescent bulb 10 (formed in this embodiment as an electrical filament bulb) within a parabolic reflector 12 provided with a cover. As in the lamp illustrated in Fig. 1, the cover is formed as a cold mirror, having a glass substrate 14 with a cold mirror coating 16.

The parabolic reflector of the Fig. 2 embodiment differs from that of the known arrangement, comprising a glass substrate 18 on which is formed a hot mirror coating 20. Consequently visible radiation can be emitted through the hot mirror reflector 18, 20 - eg. along the path seen at 22 in Fig. 2 - without forming part of the output of the lamp. In practice, visible radiation emitted through the reflector will typically pass into a light tight housing (not illustrated) of the lamp, thus being prevented from escaping to provide unwanted visible light emission at the exterior. Infra red radiation is reflected form the hot mirror reflector 18, 20 and so reaches, and is transmitted through, the cold mirror cover 14, 16. An exemplary ray path for infra red radiation is seen at 24.

The use of a hot mirror as a reflector thus substantially reduces the amount of visible radiation incident on the cover 14, 16 (as compared with the known arrangement illustrated in Fig. 1) and the amount of visible radiation (typically red light) emitted by the source is thus also reduced.

Visible emission can be reduced still further by providing a reflector between the bulb 10, or to be more specific the bulb filament seen at 26, and the cover 14, 16. In the illustrated embodiment this reflector is formed by a layer 28 on a front portion of the glass casing 30 of the bulb. The layer 28 cuts off the direct route for radiation from the filament to the cover, causing it instead to be reflected toward the reflector. While the layer 28 may be such as to reflect both visible and NIR radiation, performance can be yet further improved by forming this reflector as a cold mirror. Hence visible light is reflected by the layer 28 and out through the reflector 18, 20 yet infra red radiation can be output along a direct path through the layer 28 and the cover 14, 16.

In sources according to the present invention, the ratio of visible light emission to rear infra red emission can be appreciably reduced, helping to provide adequate infra red illumination without unacceptably large visible light emission.

## Claims

1. An infra red lamp comprising a powered emitter (10) of visible and infra red radiation, a reflector (12) formed and arranged to direct radiation from the emitter along an output path of the lamp and a filter (14) arranged in the output path to filter radiation output from the lamp, the filter being such as to preferentially transmit infra red radiation and to preferentially block visible radiation to thereby reduce the visible component of the radiation output from the lamp, and the reflector being such as to preferentially reflect infra red radiation and to preferentially transmit or absorb visible radiation to thereby reduce the visible component of the radiation incident on the filter and so further reduce the visible component of the radiation output from the lamp.

2. An infra red lamp as claimed in claim 1, adapted to emit in the near infra red region.

3. An infra red lamp as claimed in claim 2, adapted to emit in the wavelength range 850-950nm.

4. An infra red lamp as claimed in any preceding claim, wherein the reflector (12) is formed as a hot mirror.

5. An infra red lamp as claimed in any preceding claim, wherein the filter (14) is formed as a cold mirror.

6. An infra red lamp as claimed in any preceding claim, wherein the filter (14) forms a cover for the lamp.

7. An infra red lamp as claimed in any preceding claim, wherein the filter is formed as a lens.

8. An infra red lamp as claimed in any preceding claim, wherein the powered emitter is an incandescent bulb (10).

9. An infra red lamp as claimed in any preceding claim, wherein the lamp further comprises a partition disposed to at least substantially block at least visible radiation from taking a direct path from the emitter to the filter.

10. An infra red lamp as claimed in claim 9, wherein the partition takes the form of a mirror (28) interposed between the emitter and the filter.

11. An infra red lamp as claimed in claim 10, wherein the mirror (28) is arranged to reflect radiation from the emitter toward the reflector.

12. An infra red lamp as claimed in any of claims 9 to 11, wherein the partition is formed as a cold mirror (28).

13. An infra red lamp as claimed in any of claims 9 to 12, wherein the partition is formed as a layer (28) on a casing of the powered emitter.
